# EUROPÄISCHE PATENTANMELDUNG

(11) **EP 0 874 171 A1**
(43) Veröffentlichungstag der Anmeldung: **28.10.1998**
(21) Anmeldenummer: 98890109.6
(22) Anmeldetag: 15.04.1998
(51) Int. Cl.: F16C 11/04

(54) **Gelenkverbindung für Gestänge in Fahrwerken von Schienenfahrzeugen**

(30) Priorität: 23.04.1997 AT 689/97
(71) Anmelder: Siemens SGP Verkehrstechnik GmbH, 1110 Wien (AT)
(72) Erfinder: Schopf, Wolfgang, 2051 Zellerndorf (AT); Cermak, Felix, 1232 Wien (AT)
(74) Vertreter: Matschnig, Franz, Dipl.-Ing.

(57) **Zusammenfassung**

Eine Gelenkverbindung für Gestänge (4, 6) in Fahrwerken von Schienenfahrzeugen, bei welcher die Innenschale (15) eines Lagers (13) unter Zuhilfenahme von Keilelementen (17-18) nach Spannkappen (19, 20) an einem Bolzen (16) gehalten ist, und eine Durchgangsbohrung (22) des Bolzens zu dessen beiden Enden hin Erweiterungen (23) aufweist, in welchen innere zylindrische Vorsprünge (24, 25) der Spannkappen aufgenommen sind.

## Beschreibung

Die Erfindung bezieht sich auf eine Gelenkverbindung für Gestänge in Fahrwerken von Schienenfahrzeugen, bei welcher die Innenschale eines Lagers an einem Bolzen sitzt, der mit über die Innenschale vorstehenden Randabschnitten in zwei fluchtenden Bohrungen eines Gabelstücks eines ersten Gestängeteils aufgenommen ist und die Außenschale des Lagers in einer Bohrung eines zweiten Gestängeteils sitzt, zwischen Innenwand der beiden fluchtenden Bohrungen und dem zugehörigen Randabschnitt des Bolzens ein ringförmiges, aus zwei mit konischen Flächen ineinandergreifenden Spannringen bestehendes Keilelement gespannt ist und die Spannringe mit Hilfe von Spannkappen und zumindest einer Spannschraube gespannt werden.

Bei Schienenfahrzeugen, insbesondere bei solchen für den innerstädtischen Verkehr ist aus verschiedenen Gründen, insbesondere wegen der geringen Kurvenradien, eine gegenseitige Steuerung der Laufräder bzw. Fahrgestelle eines Fahrzeuges erwünscht. Zu diesem Zweck werden Steuerstangen und Steuerhebel verwendet, welche z. B. an jeder Seite eines Schienenfahrzeuges die Bewegung eines ersten Radkastens über eine verhältnismäßig große Strecke, z. B. sechs Meter, zu einem zweiten Radkasten übertragen müssen. An die Gelenkverbindungen zwischen den hierbei verwendeten Gestängeteilen werden hohe Anforderungen bezüglich der Lebensdauer und Wartungsfreiheit gestellt. Erschwerend wirken dabei die relativ hohen Kräfte, welche die Steuerstangen zu übertragen haben, und welchen sich Vibrationen der Räder sowie Stöße überlagern. In konstruktiver Hinsicht ist zu beachten, daß, insbesondere bei sog. Niederflur-Straßenbahnen, eine sehr geringe Bauhöhe für die Anordnung der Steuerstangen und Hebel zur Verfügung steht.

Es ist bekannt geworden, eine Gelenkverbindung für Gestänge in Fahrwerken von Schienenfahrzeugen so auszubilden, daß der Bolzen mit dem ersten Gestängeteil fest verbunden und in den fluchtenden Bohrungen des zweiten, gabelförmigen Gestängeteils mittels dort eingepaßter Gleitlager gelagert wird. Diese Lösung führt einerseits zu Schwierigkeiten beim Zusammenbau oder beim Auswechseln, da beispielsweise seitlich einzuschraubende Sicherungsstifte für den Bolzen benötigt werden, andererseits ist die durch Abnutzung durch die im Betrieb auftretenden Vibrationen und Stöße gegbene Lebensdauer verbesserungswürdig, wobei zu erwähnen ist, daß im Betrieb tatsächlich auch Verwindungen auftreten, die zusätzlich axiale Belastungen der Gelenke hervorrufen.

Eine Gelenkverbindung der eingangs genannten Art ist aus der DE 34 41 955 Al bekannt geworden, wobei diese Gelenkverbindung allerdings für den Einsatz in Erdbewegungsmaschinen konzipiert wurde. Die bekannte Gelenkverbindung berücksichtigt zwar das Problem von Verschmutzung durch Erdreich etc., nicht jedoch jenes, das mit der erwähnten geringen Bauhöhe bei Niederflur-Straßenbahnwagen etc. zusammenhängt. Das Ein- und Ausbauen erfordert auch eine Zugänglichkeit von beiden Seiten in axialer Richtung.

Eine verwandte Gelenkverbindung geht aus der DE 40 38 185 Al hervor, die ein Radiallager zeigt, bei welchem eine Vorspannung auf das Radiallager mit Hilfe von Spreizelementen aufgebracht wird, die innerhalb eines radial dehnbaren Bolzens angeordnet wird. Abgesehen davon, daß diese Konstruktion von der gegenständlichen stark abweicht und sehr teuer ist werden weder eine geringe Bauhöhe noch die Zugänglichkeit von nur einer Seite berücksichtigt.

Eine für Schaufellader bestimmte Gelenksverbindung ist in der US 4 398 862 geoffenbart. Dabei sind an beiden Seiten des Bolzens, der keine Durchgangsbohrung besitzt, einfache Ringkeile durch Endplatten unter Spannung setzbar. Weder die Bauhöhe noch die Zugänglichkeit entsprechen den obgenannten Forderungen.

Bei einer für die Lenkung von Kraftfahrzeugen bestimmten Gelenkverbindung werden gleichfalls einfache Ringkeile verwendet, wobei die auf das Lager ausgeübte Spannung durch Hinzufügen oder Wegnehmen von Unterlagscheiben eingestellt werden muß. Bauhöhe und Zugänglichkeit dieser bekannten Gelenkverbindung entsprechen nicht den Bedürfnissen, die bei Unterflur-Schienenfahrzeugen vorliegen.

Die Erfindung hat sich die Aufgabe gestellt, den oben angeführten Problemen wirkungsvoll zu begegnen und eine Gelenkverbindung zu schaffen, die bei Berücksichtigung der Forderung nach geringer Einbauhöhe und leichtem Ein- und Ausbau eine hohe Lebensdauer bietet.

Diese Aufgabe wird ausgehend von einer Gelenkverbindung der eingangs genannten Art erfindungsgemäß dadurch gelöst, daß eine Durchgangsbohrung des Bolzens zu dessen beiden Stirnenden hin Erweiterungen aufweist und die Spannkappen innere zylindrische Vorsprünge besitzen, die in den Erweiterungen des Bolzens aufgenommen sind.

Die Erfindung bietet unter anderem den Vorteil, daß nebst hoher Lebensdauer ein einfacher Einbau (und Ausbau) auch nur von einer Seite möglich ist, wobei sich besondere Maßnahmen, wie zusätzliche Schrauben etc. zur Sicherung erübrigen. Weiters kann dank der Erfindung eine extrem niedrige Bauhöhe erzielt werden.

Im Sinne eines raumsparenden Aufbaus ist es auch zielführend, falls die Spannkappen zumindest eine Bohrung für die zumindest eine Spannschraube aufweisen, die in der einen Spannkappe als Gewindebohrung und in der anderen Spannkappe als Durchgangsbohrung ausgebildet ist, wobei die zumindest eine Gewindebohrung eine Sackbohrung sein kann.

Zur symmetrischen Kraftaufbringung bei geringem konstruktiven Aufwand empfiehlt es sich, wenn drei winkelsymmetrisch zur Bolzen- und Lagerachse verlaufende Spannschrauben vorgesehen sind.

Zum weiteren Schutz vor Verschmutzung kann zwischen Innenflächen der Gabelstücke des ersten Gestängeteils und Außenflächen des zweiten Gestängeteils je eine ringförmige Dichtung angeordnet angeordnet sein.

Eine weitere zweckmäßige Maßnahme zur Bauhöhenminderung liegt darin, daß jede der Spannkappen an ihrer Innenseite eine ebene ringförmige Stirnfläche besitzt, mit welcher sie an dem zugeordneten äußeren Spannring angreift.

Vor allem in Hinblick auf die bereits angesprochenen Verwindungen ist es ratsam, das Lager als Radial-Gelenklager auszubilden. Dabei kann zur Erzielung hoher Wartungsfreiheit eine Lagergleitfläche mit einem Gleitwerkstoff auf PTFE-Basis beschichtet sein.

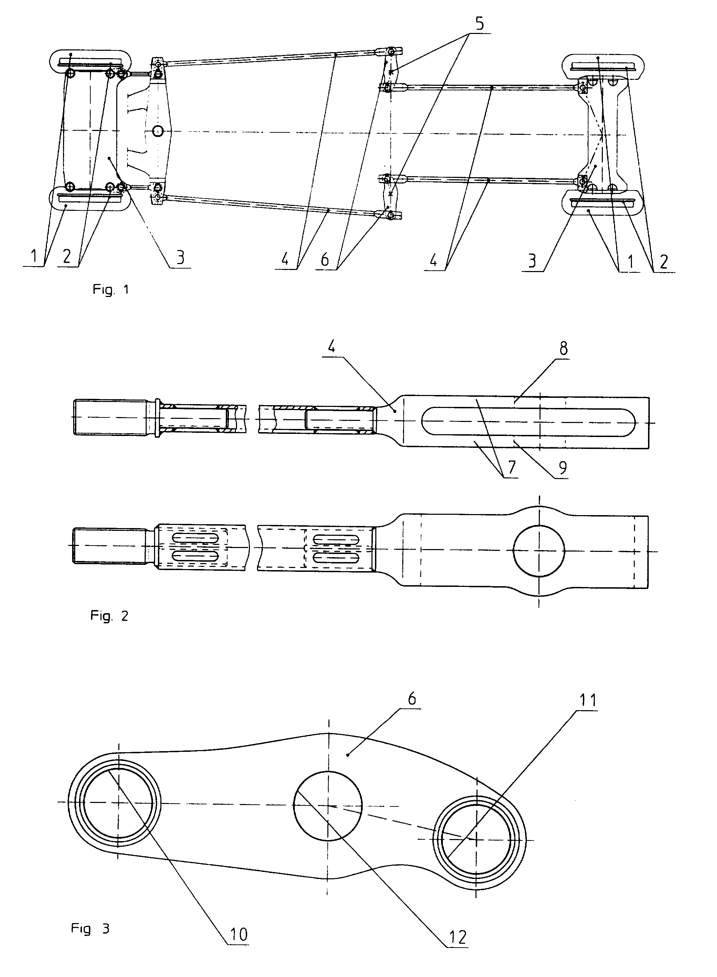

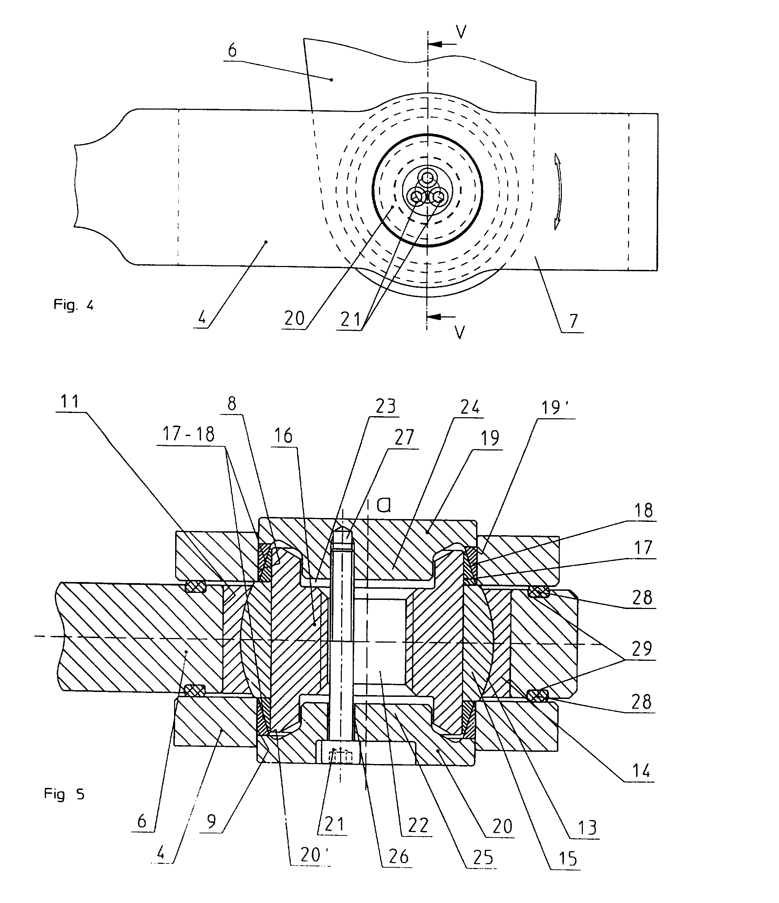

Die Erfindung samt weiterer Vorteile ist im folgenden an Hand einer beispielsweisen Ausführungsform näher erläutert, die in der Zeichnung veranschaulicht ist. In dieser zeigen Fig. 1 in schematischer Draufsicht die Gestängeanordnung für eine Transversalsteuerung bei einem Schienenfahrzeug, Fig. 2 in vergrößerter Seitenansicht eine mögliche Ausführung einer in Fig. 1 gezeigten Steuerstange, Fig. 3 in vergrößerter Draufsicht eine mögliche Ausführung eines in Fig. 1 gezeigten Steuerhebels, Fig. 4 eine Unteransicht auf eine Gelenkverbindung aus Fig. 1 in vergrößertem Maßstab und Fig. 5 in einem Schnitt längs der Linie V-V der Fig. 4 die erfindungsgemäße Gelenkverbindung im Detail.

Gemäß Fig. 1 tragen vier Radkästen 1 eines nicht näher gezeigten Wagens einer Niederflur-Straßenbahn Räder 2, wobei an jeder Seite des Wagens eine Direktsteuerung der Räder 2 dadurch erfolgt, daß die um eine Achse 3 schwenkbaren Radkästen 1 jeder Seite über zwei Steuerstangen 4 im folgenden auch "erster Gestängeteil 4" genannt, und einen um eine Achse 5 verschwenkbaren Steuerhebel 6, im folgenden auch "zweiter Gestängeteil 6" genannt, in der gezeigten Weise gelenkig miteinander verbunden sind. Eine solche Direktsteuerung, die als solche nicht Gegenstand der Erfindung ist, weist tatsächlich noch weitere Teile, wie Dämpfungen, Federungen, etc. auf

Eine Steuerstange 4, genauer gesagt, ein Teil derselben, kann beispielsweise die in Fig. 2 gezeigte Gestalt besitzen, wobei an zumindest einem Ende ein Gabelstück 7 mit zwei fluchtenden Bohrungen 8,9 vorgesehen ist. Eine mögliche Ausbildung des Steuerhebels 6 ist dagegen in Fig. 3 gezeigt, wonach der Steuerhebel 6 an seinen Enden Bohrungen 10,11 besitzt, die zur gelenkigen Verbindung mit den Steuerhebeln 4 in noch zu erläuternder Weise herangezogen werden, wogegen eine weitere Bohrung 12 in Zusammenhang mit einem nicht gezeigten Bolzen die Verschwenkbarkeit des Steuerhebels 6 um die Achse 5 ermöglicht.

Die erfindungsgemäße Gelenkverbindung wird nun unter Bezugnahme auf die Fig. 4 und 5 an einer Verbindung einer Steuerstange 4 mit einem Ende eines Steuerhebels 6 genauer erklärt, doch sollte es klar sein, daß eine derartige Gelenkverbindung beispielsweise auch auf das Schwenklager (Achse 5) eines Steuerhebels 6 oder auf die Anlenkung einer Steuerstange 4 an einen Radkasten 1 anwendbar ist. Die Gelenkverbindung kann sich beispielsweise auch auf die Lagerung eines Dämpferhebels in einem Fahrwerk beziehen.

Die Gelenkverbindung ist im wesentlichen aufgebaut aus: einem Radial-Gelenklager 13, das eine Außenschale 14 sowie eine Innenschale 15 besitzt, wobei die Außenschale 14 in der Bohrung 11 des Steuerhebels 6 (zweiter Gestängeteil) sitzt, aus je zwei, mit ihren konischen Flächen ineinandergreifenden Spannringen 17-18 zwischen den Innenflächen der Bohrungen 8,9 der Steuerstange 4 (erster Gestängeteil) und Randabschnitten des Bolzens 16 bilden, sowie aus zwei Spannkappen 19,20, die mit Hilfe von drei Spannschrauben 21 gegeneinandergezogen sind und an den äußeren Spannringen 18 angreifen.

Wie insbesondere aus Fig. 5 ersichtlich, weist der Bolzen 16 eine Durchgangsbohrung 22 auf, deren Achse im wesentlichen mit der Lagerachse zusammenfällt, und die zu beiden Stirnenden des Bolzens 16 hin Erweiterungen 23 aufweist. Wie aus der Zeichnung ersichtlich, können diese Erweiterungen 23 zylindrische Vorsprünge 24,25 der Spannkappen 19,20 aufnehmen.

In dem Vorsprung 25 der unteren Spannkappe 20 sind, winkelsymmetrisch zur Achse a drei Durchgangsbohrungen 26 vorgesehen, wobei in dem Vorsprung 24 der oberen Spannkappe 19 korrespondierend zu den Durchgangsbohrungen 26 Gewinde-Sackbohrungen 27 ausgebildet sind. Mit Hilfe der drei Spannschrauben 21, die auch als "Dehnschrauben" bezeichnet werden können, lassen sich die beiden Spannkappen 19,20 gegeneinander ziehen, wobei die Spannschrauben 21 die Bohrungen 26 durchsetzen und mit ihren Gewindeabschnitten in die Sack-Gewindebohrungen 27 eingeschraubt werden. Jede der Spannkappen 19,20 besitzt an ihrer Innenseite eine ebene, ringförmige Stirnfläche 19',20', mit welcher sie an dem zugeordneten äußeren Spannring 18 angreift. Dadurch drückt der äußere Spannring 18 mit seiner konischen Innenfläche gegen die konische Außenfläche des inneren Spannringes 17 und jeder innere Spannring wird mit seiner Außenfläche gegen den je über die Lagerinnenschale 15 vorstehenden Randbereich des Bolzens 16 sowie mit einer Stirnfläche gegen eine Stirnfläche der Lagerinnenschale 15 gepreßt. Auf diese Weise wird eine spielfreie und verdrehsichere Verbindung zwischen dem Bolzen 16 und dem Gabelstück 7 gewährleistet, die auch unter den auftretenden Belastungen bestehen bleibt. Der Einsatz des Keilelements 17-18 bringt als weiteren Effekt eine zusätzliche Sicherung der inneren Lagerschale 15 durch den inneren Spannring 18 an dem Bolzen 16.

Es ist anzumerken, daß die Außenschale 14 des Lagers 13 in die Bohrung 11 des zweiten Gestängeteils 6 mit Vorteil eingeklebt werden kann und daß eine Lagerfläche mit einem Gleitwerkstoff auf PTFE-Basis beschichtet ist. Der Bolzen 16 sitzt mit leichtem Preßsitz in der Innenschale 15 des Lagers 13. Radial-Gelenklager der gegenständlichen Art sind beispielsweise in der Norm DIN 648 beschrieben. Keilelemente 17-18 wie hier verwendet werden beispielsweise von der Fa. Elges unter dem Markennamen RINGFEDER^{R} RfN 8006 vertrieben.

Wie Fig. 5 verdeutlicht, kann die Gelenksverbindung nach der Erfindung eine geringe Bauhöhe aufweisen und die beiden Spannkappen 19,20 wirken zusätzlich als Schutz gegen Verschmutzung des Lagers 13. Als weiterer Schutz kann je eine ringförmige Dichtung 28 zwischen den Innenflächen des Gabel stücks 7 und Außenflächen des zweiten Gestängeteils 6 angeordnet sein. Im vorliegenden Fall sind die Dichtungen 28 in Ringnuten 29 des zweiten Gestängeteils 6 eingelegt, doch können auch flache, an einer Seite angeklebte Dichtungen verwendet werden. Der Ein- und Ausbau der Lager bzw. Zusammenbau der Gelenkverbindung kann bei der gezeigten Ausführungsform von unten erfolgen, was besonders bei Niederflur-Straßenbahnwagen von Vorteil ist.

## Patentansprüche

1. Gelenkverbindung für Gestänge (4, 6) in Fahrwerken von Schienenfahrzeugen, bei welcher die Innenschale (15) eines Lagers (13) an einem Bolzen (16) sitzt, der mit über die Innenschale vorstehenden Randabschnitten in zwei fluchtenden Bohrungen (8, 9) eines Gabelstücks (7) eines ersten Gestängeteils (4) aufgenommen ist und die Außenschale (14) des Lagers in einer Bohrung (11) eines zweiten Gestängeteils (6) sitzt, zwischen Innenwand der beiden fluchtenden Bohrungen und dem zugehörigen Randabschnitt des Bolzens ein ringförmiges, aus zwei mit konischen Flächen ineinandergreifenden Spannringen (17, 18) bestehendes Keilelement (17-18) gespannt ist und die Spannringe mit Hilfe von Spannkappen (19, 20) und zumindest einer Spannschraube (21) gespannt werden,
dadurch gekennzeichnet, daß
eine Durchgangsbohrung (22) des Bolzens (16) zu dessen beiden Stirnenden hin Erweiterungen (23) aufweist und die Spannkappen (19, 20) innere zylindrische Vorsprünge (24, 25) besitzen, die in den Erweiterungen des Bolzens (16) aufgenommen sind.

2. Gelenkverbindung nach Anspruch 1, dadurch gekennzeichnet, daß die Spannkappen (19, 20) zumindest eine Bohrung (26, 27) für die zumindest eine Spannschraube (21) aufweisen, die in einer Spannkappe (19) als Gewindebohrung (27) und in der anderen Spannkappe (20) als Durchgangsbohrung (26) ausgebildet ist.

3. Gelenkverbindung nach Anspruch 1 oder 2, dadurch gekennzeichnet, daß die zumindest eine Gewindebohrung (27) eine Sackbohrung ist.

4. Gelenkverbindung nach einem der Ansprüche 1 bis 3, dadurch gekennzeichnet, daß drei winkelsymmetrisch zur Bolzen- und Lagerachse (a) verlaufende Spannschrauben (21) vorgesehen sind.

5. Gelenkverbindung nach einem der Ansprüche 1 bis 4, dadurch gekennzeichnet, daß zwischen Innenflächen der Gabelstücke des ersten Gestängeteils (4) und Außenflächen des zweiten Gestängeteils (6) je eine ringförmige Dichtung (28) angeordnet ist.

6. Gelenkverbindung nach einem der Ansprüche 1 bis 5, dadurch gekennzeichnet, daß jede der Spannkappen (19, 20) an ihrer Innenseite eine ebene ringförmige Stirnfläche (19', 20') besitzt, mit welcher sie an dem zugeordneten äußeren Spannring (18) angreift.

7. Gelenkverbindung nach einem der Ansprüche 1 bis 6, dadurch gekennzeichnet, daß das Lager (13) als Radial-Gelenklager ausgebildet ist.

8. Gelenkverbindung nach Anspruch 7, dadurch gekennzeichnet, daß eine Lagergleitfläche mit einem Gleitwerkstoff auf PTFE-Basis beschichtet ist.
